# EUROPEAN PATENT APPLICATION

(11) **EP 1 783 964 A1**
(43) Date of publication of application: **09.05.2007**
(21) Application number: 05767356.8
(22) Date of filing: 28.07.2005
(51) Int. Cl.: H04L 12/56

(54) **MOBILE COMMUNICATION SYSTEM, PACKET TRANSFER DEVICE, AND PATH RE-ESTABLISHING METHOD**

(30) Priority: 30.07.2004 JP 2004224962
(71) Applicant: MATSUSHITA ELECTRIC INDUSTRIAL CO., LTD., Kadoma-shi, Osaka 571-8501 (JP)
(72) Inventor: KAWAKAMI, Tetsuya c/o Matsushita El. Ind. Co.Ltd., chuo-ku, Osaka-shi, Osaka 540-6319 (JP)
(74) Representative: Casalonga, Axel
(86) International application number: PCT/JP2005/013868
(87) International publication number: WO 2006/011569

(57) **Abstract**

Disclosed is a technique for providing a mobile communication access system, etc., that can eliminate a useless consumption of resources due to route redundancy, reduce a load on the LSR processing, such as the setup of an LSP, avoid an increase in the length of a signal route, suppress a delay in providing a notification of the change for an LSR to which a mobile terminal is to be connected. According to this technique, a second edge device 101b obtains an identifier for a label switch path designated as being used for a mobile terminal 100 and an address for a communication destination edge device 101c, and employs the obtained information for a path and outputs a path setup request packet to the communication destination edge device to request a setup for a path to the second edge device. And of packet transfer devices on the label switch path used for the mobile terminal, a first packet transfer device that received the path setup request packet is regarded as a branch node, and the branch node traps the path setup request packet, sets a branch path addressed to the second edge device, and thereafter changes a transfer destination.

## Description

### TECHNICAL FIELD

The present invention relates, in a label switching technology such as MPLS (Multi Protocol Label Switching), which transfers data using a label, to a mobile communication access system, a packet transfer device and a path re-establishing method for controlling a change in a path.

### BACKGROUND ART

With a conventional label switching technology, a standard protocol technique that constitutes an LSP (Label Switch Path) is disclosed in non-patent document 1 below. The technique disclosed in non-patent document 1 is a protocol that constitutes a point-to-point path, and enables exchanging of a PATH message and a Resv message between an ingress LSR (Label Switch Router) and an egress LSR, which serve as edges, so as to form a label path and to reserve a band. On the other hand, standardization is currently performed in order to form a path for a point-to-multipoint path for multicasting, etc., and this technique is disclosed in non-patent document 2 below. The technique in non-patent document 2 employs, in a session object, an identifier that is used in common for identifying a point-to-multipoint path, and forms a point-to-multipoint path using a plurality of point-to-point paths (branch LSPs). Specifically, when an Resv message is received by a branch LSR, which is a branch node, the above described identifier in common is acknowledged, and the branch LSPs of multiple point-to-points that belong to the same point-to-multipoint path are merged. In this manner, a point-to-multipoint path is formed.

When either of these conventional methods is applied to a mobile communication access system, it might be possible to consider that the individual LSPs may be respectively set for mobile terminals, and in accordance with shift, the paths of the LSPs may be changed. Further, as for the application of the MPLS to a mobile unit, several methods have been proposed whereby, based on a change in the IP address of a mobile terminal (MH) in cooperation with a mobile IP, the path is changed to a new IP address (CoA: Care of Address). However, the cooperation with a mobile IP performs a change of an LSP by using a binding update of a new CoA that is outputted from the mobile terminal to an HA (Home Agent) after the handover of the mobile terminal has been completed. Therefore, the change of the path occurs after the operation of the mobile IP results in that the performance of a fast handover is difficult. Thus, our purpose is for an LSP to be treated as a tunnel for layer 2, so that only the handover process on layer 2 need be performed, by changing an LSP, without requiring the handover process on layer 3. Further, for a mobile communication access system, it is assumed that the transfer of a packet is performed while a connection node to an external network is regarded as an ingress for an LSP that serves as a layer 2 tunnel, and an accommodated node wherein a mobile terminal is accommodated is regarded as an egress.
Non-patent Document 1: "RSVP-TE: Extensions to RSVP for LSP Tunnels", IETF Standards, RFC 3209
Non-patent Document 2: "Establishing Point to Multipoint MPLS TE LSPs", draft-raggarwa-mpls-p2mp-te-02.txt

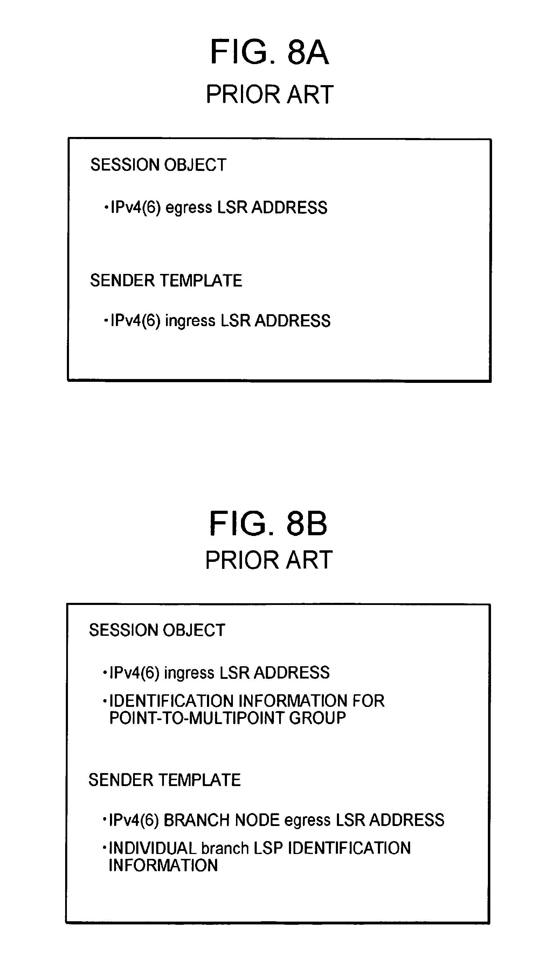

However, in a case where the handover process on only the layer 2 is performed, although the IP address for the mobile terminal is unchanged, the LSP should be changed and the packet addressed to the pertinent mobile terminal must be appropriately transferred to a destination. When the route of the LSP is changed as the mobile terminal is moved, the following problem is encountered. First, according to the technique disclosed in non-patent document 1, identification of the LSP for each LSR is defined as shown in Fig. 8A. In order to be identified as the same LSP, the session object should be identical. However, as shown in Fig. 8A, since the address of an egress LSR is employed as a session object, in a case wherein the egress LSR is changed as the mobile terminal is moved, instead of changing the route between the same LSPs, a new LSP is set up, and then a LSP used by the mobile terminal is changed. Therefore, the useless consumption of a resource reservation occurs at the route redundant portion. According to the technique disclosed in non-patent document 2, the LSP is defined as shown in Fig. 8B. Since, as a session object, the address of an ingress LSR is employed instead of an egress LSR, the same value can be used when the egress LSR is changed as the mobile terminal is moved. However, using the technique disclosed in non-patent document 2, the setup and maintenance of a plurality of routes, relative to a plurality of destinations (egress LSRs), must be the responsibility of the ingress LSR. When this technique is applied for mobile communication, the setup and maintenance of an LSP must be performed for each mobile terminal, and the process performed by the ingress LSR becomes enormous, as the number of mobile terminals is increased. Furthermore, according to techniques disclosed in the two non-patent documents described above, since all signaling performed is from the ingress LSR to the egress LSR, the signal route is extended, and it is assumed that the ingress LSR knows the egress LSR is the destination. For mobile communication wherein a mobile terminal moves while sequentially changing an egress LSR, a delay in communication with the ingress LSR for the notification of a change for an egress LSR is also increased in accordance with the increase in the size of a network.

### DISCLOSURE OF THE INVENTION

The present invention has been made to solve the above-described problems, and an object of the present invention is to provide a mobile communication access system, and provide a packet transfer device and a path re-establishing method that can eliminate a useless consumption of resources due to route redundancy, reduce a load on the processing, such as the setup of an LSP, performed by an ingress LSR, avoid an increase in the length of a signal route for setting up an LSP, suppress a delay in providing a notification of the change for an egress LSR to which a mobile terminal is to be connected.

To achieve this object, according to the present invention, there is provided a mobile communication access system, which comprises:
edge devices, located at edges of an access network, for connecting a mobile terminal to an external ISP network via a layer 2 tunnel, so as to provide communication between the mobile terminal and a communication destination for the mobile terminal; and
packet transfer devices, belonging to the access network and being located at other than the edges of the access network, for transferring a packet to be exchanged by the mobile terminal and the communication destination of the mobile terminal, and
which designates a label switching path, to which identification information for the mobile terminal is attached, between a first edge device, for the edge devices, for accommodating the mobile terminal and a communication destination edge device, for the edge devices, that is connected to an external network device that is a communication destination for the mobile terminal, so that the label switching path is directed, via the packet transfer devices, from the communication destination edge device to the first edge device,
wherein, when the mobile terminal changes, due to its move, a connection destination from the first edge device to a second edge device that is one of the edge devices, the second edge device obtains an identifier for a label switch path designated as being used for the mobile terminal and an address for the communication destination edge device, and the second edge device employing the obtained information for a path and outputting a path setup request packet to the communication destination edge device to request a setup for a path to the second edge device, and
wherein, of the packet transfer devices on the label switch path used for the mobile terminal, a first packet transfer device that received the path setup request packet is regarded as a branch node, and the branch node traps the path setup request packet, sets a branch path addressed to the second edge device, and thereafter changes a transfer destination. With this arrangement, an unwanted consumption of resources due to route redundancy can be prevented, a load imposed on the processing, such as the setup of an LSP performed by the ingress LSR, can be reduced, an increase in the length of a signal route for setting up the LSP can be avoided, and a delay in the notification of the change of the egress LSP, to which the mobile terminal is to be connected, can be suppressed.

Further, according to one preferred embodiment of the mobile communication access system of this invention, after the mobile terminal has obtained the path information from the edge devices, when a label switch path was set the first time, the mobile terminal transmits a notification for the path information to the second edge device that serves as a moving destination for the mobile terminal. With this arrangement, the second edge device can obtain path information.

Furthermore, according to another preferred embodiment of the mobile communication access system of the invention, after the first edge device has received, from the mobile terminal, the address of the second edge device, which is a moving destination, the first edge device transmits to the second edge device a path information notification for the mobile terminal that has been designated for the first edge device. With this arrangement, the second edge device can obtain path information.

Additionally, according to one preferred embodiment of the mobile communication access system of the invention, the packet transfer device on the label switch path searches an internally prepared path setup table using an identifier for the label switch path that is included in the patch setup request packet, and when the label switch path has already been set for the packet transfer device, the packet transfer device designates itself as the branch node and halts the packet transfer. When the label switch path is not included in the path setup table of the packet transfer device, the packet transfer device transfers the path setup request packet to the communication destination edge device. With this arrangement, the branch node can be detected.

Moreover, according to one preferred embodiment of the mobile communication access system of the invention, as signal procedures for setting a label switch path, the branch node supports an RSVP (Resource Reservation Protocol)-TE, and does not employ the address of the branch node but the address of the communication destination edge device as an address for an Ingress LSR that is included in a path request message. With this arrangement, the branch node can appropriately perform the path setup.

Also, according to one preferred embodiment of the mobile communication access system of the invention, at the time of the path setup, when the branch node receives a value for a label via a reserve message, the branch node exchanges an old destination for a new destination in a transfer table. With this arrangement, the branch node can construct a new transfer table.

Further, according to one preferred embodiment of the mobile communication access system of the invention, at the time of the path setup, when the branch node receives a value for a label via a reserve message, the branch node registers, in a transfer table, both an old destination and a new destination as transfer destinations, and copies a packet to be transferred to two paths. With this arrangement, the branch node can transfer a packet to two destinations.

Furthermore, according to one preferred embodiment of the mobile communication access system of the invention, the branch node, after having re-established a label switch path to the second edge device instead of the first edge device, thereafter transmits to the communication destination edge device a path change notification that includes the address of the second edge device. With this arrangement, the communication destination edge device can identify a change in a path.

Further, according to the present invention, for a mobile communication access system that includes:
edge devices, located at edges of an access network, for connecting a mobile terminal to an external ISP network via a layer 2 tunnel, so as to provide communication between the mobile terminal and a communication destination for the mobile terminal; and
packet transfer devices, belonging to the access network and being located at other than the edges of the access network, for transferring a packet to be exchanged by the mobile terminal and the communication destination of the mobile terminal,
the mobile communication access system designating a label switching path, to which identification information for the mobile terminal is attached, between a first edge device, for the edge devices, for accommodating the mobile terminal and a communication destination edge device, for the edge devices, that is connected to an external network device that is a communication destination for the mobile terminal, so that the label switching path is directed, via the packet transfer devices, from the communication destination edge device to the first edge device,
the packet transfer device in case where the mobile terminal changes, due to its move, a connection destination from the first edge device to a second edge device that is one of the edge devices, comprising:
   reception means, for receiving a path setup request packet from the second edge device;
   branch path setup means, for trapping the path setup request packet received by the reception means and setting a branch path addressed to the second edge device; and,
   transfer destination change means, for changing a transfer destination after the branch path has been designated by the branch path setting means.
   With this arrangement, an unwanted consumption of resources due to route redundancy can be prevented, a load imposed on the processing, such as the setup of an LSP performed by the ingress LSR, can be reduced, an increase in the length of a signal route for setting up the LSP can be avoided, and a delay in the notification of the change of the egress LSP, to which the mobile terminal is to be connected, can be suppressed.

Additionally, according to one preferred embodiment of the packet transfer device of the invention, the packet transfer device on the label switch path searches an internally prepared path setup table using an identifier for the label switch path that is included in the patch setup request packet, and when the label switch path has already been set for the packet transfer device, the packet transfer device designates itself as the branch node and halts the packet transfer. When the label switch path is not included in the path setup table of the packet transfer device, the packet transfer device transfers the path setup request packet to the communication destination edge device. With this arrangement, the packet transfer device can detect whether or not this is a branch node.

Moreover, according to one preferred embodiment of the packet transfer device of the invention, as signal procedures for setting a label switch path, the branch path setting means supports an RSVP-TE, and does not employ the address of the branch node but the address of the communication destination edge device as an address for an Ingress LSR that is included in a path request message. With this arrangement, the packet transfer device can appropriately perform the path setup.

Also, according to one preferred embodiment of the packet transfer device of the invention, at the time of the path setup, when the transfer destination change means receives a value for a label via a reserve message, the transfer destination change means exchanges an old destination for a new destination in a transfer table. With this arrangement, the packet transfer device can construct a new transfer table.

Further, according to one preferred embodiment of the packet transfer device of the invention, at the time of the path setup, when the transfer destination change means receives a value for a label via a reserve message, the transfer destination change means registers, in a transfer table, both an old destination and a new destination as transfer destinations, and copies a packet to be transferred to two paths. With this arrangement, the packet transfer device can transfer a packet to two destinations.

Furthermore, according to one preferred embodiment of the packet transfer device of the invention, after a label switch path has been re-established to the second edge device instead of the first edge device, a path change notification that includes the address of the second edge device is transmitted to the communication destination edge device. With this arrangement, the communication destination edge device can identify a change in a path.

Further, according to the present invention, for a mobile communication access system that includes
edge devices, located at edges of an access network, for connecting a mobile terminal to an external ISP via a layer 2 tunnel, so as to provide communication between the mobile terminal and a communication destination for the mobile terminal, and
packet transfer devices, belonging to the access network and being located at other than the edges of the access network, for transferring a packet to be exchanged by the mobile terminal and the communication destination of the mobile terminal, and
that designates a label switching path, to which identification information for the mobile terminal is attached, between a first edge device, for the edge devices, for accommodating the mobile terminal and a communication destination edge device, for the edge devices, that is connected to an external network device that is a communication destination for the mobile terminal, so that the label switching path is directed, via the packet transfer devices, from the communication destination edge device to the first edge device,
wherein, when, in accordance with a move, the mobile terminal changes a connection destination from the first edge device to a second edge device, one of the edge devices,
provided is a path re-establishing method comprising the steps of:
the second edge device obtaining an identifier for a label switch path designated as being used for the mobile terminal and an address for the communication destination edge device, and employing the obtained information for a path and outputting a path setup request packet to the communication destination edge device to request a setup for a path to the second edge device; and
regarding, as a branch node, of the packet transfer devices on the label switch path used for the mobile terminal, a first packet transfer device that received the path setup request packet, and the branch node trapping the path setup request packet, setting a branch path addressed to the second edge device, and thereafter changing a transfer destination. With this arrangement, an unwanted consumption of resources due to route redundancy can be prevented, a load imposed on the processing, such as the setup of an LSP performed by the ingress LSR, can be reduced, an increase in the length of a signal route for setting up the LSP can be avoided, and a delay in the notification of the change of the egress LSP, to which the mobile terminal is to be connected, can be suppressed.

Further, according to one preferred aspect of this invention, the path re-establishing method comprises a step of, after the mobile terminal has obtained the path information from the edge devices, when a label switch path was set the first time, the mobile terminal transmitting a notification for the path information to the second edge device that serves as a moving destination for the mobile terminal. With this arrangement, the second edge device can obtain path information.

Furthermore, according to another preferred aspect of this invention, the path re-establishing method comprises a step of, after the first edge device has received, from the mobile terminal, the address of the second edge device, which is a moving destination, the first edge device transmitting to the second edge device a path information notification for the mobile terminal that has been designated for the first edge device. With this arrangement, the second edge device can obtain path information.

Additionally, according to one preferred aspect of this invention, the path re-establishing method comprises a step of the packet transfer device on the label switch path searching an internally prepared path setup table using an identifier for the label switch path that is included in the patch setup request packet, and when the label switch path has already been set for the packet transfer device, the packet transfer device designating itself as the branch node and halts the packet transfer, or when the label switch path is not included in the path setup table of the packet transfer device, transferring the path setup request packet to the communication destination edge device. With this arrangement, the packet transfer device can detect whether this is a branch node or not.

Moreover, according to one preferred aspect of the path re-establishing method of the invention, as signal procedures for setting a label switch path, the branch node supports an RSVP-TE, and does not employ the address of the branch node but the address of the communication destination edge device as an address for an Ingress LSR that is included in a path request message. With this arrangement, the branch node can appropriately perform the path setup.

Also, according to one preferred aspect of this invention, the path re-establishing method comprises a step of, at the time of the path setup, when the branch node receives a value for a label via a reserve message, the branch node exchanging an old destination for a new destination in a transfer table. With this arrangement, the branch node can construct a new transfer table.

Further, according to one preferred aspect of this invention, the path re-establishing method comprises a step of, at the time of the path setup, when the branch node receives a value for a label via a reserve message, the branch node registering, in a transfer table, an old destination and a new destination as transfer destinations, and copying a packet to be transferred to two paths. With this arrangement, the branch node can transfer a packet to two destinations.

Furthermore, according to one preferred aspect of this invention, the path re-establishing method comprises a step of the branch node, after having re-established a label switch path to the second edge device instead of the first edge device, transmitting to the communication destination edge device a path change notification that includes the address of the second edge device. With this arrangement, the communication destination edge device can identify a change in a path.

The mobile communication access system, the packet transfer device and the path re-establishing method of the invention have the above described configurations, and an unwanted consumption of resources due to route redundancy can be prevented, a load imposed on the processing, such as the setup of an LSP performed by the ingress LSR, can be reduced, an increase in the length of a signal route for setting up the LSP can be avoided, and a delay in the notification of the change of the egress LSP, to which the mobile terminal is to be connected, can be suppressed.

### BRIEF DESCRIPTION OF THE DRAWINGS

[Fig. 1A]
   A diagram showing a mobile communication access system, according to one mode of the present invention, before a mobile terminal accessible to the mobile communication access system moves.
[Fig. 1B]
   A diagram showing the mobile communication access system, according to the mode of the present invention, after the mobile terminal accessible to the mobile communication access system has moved.
[Fig. 2A]
   A diagram showing the protocol stack of a control plane for the mobile communication access system according to the mode of the present invention.
[Fig. 2B]
   A diagram showing the protocol stacks of a transfer plane for the mobile communication access system according to the mode of the present invention.
[Fig. 3]
   A diagram for explaining the identification of an LSP for the mobile communication access system according to the mode of the present invention.
[Fig. 4]
   A sequence chart for explaining example operating procedures for the mobile communication access system according to the mode of the present invention.
[Fig. 5A]
   A diagram showing a transfer table before movement of an MH that is managed by a packet transfer device serving as a branch node in the mobile communication access system according to the mode of the present invention.
[Fig. 5B]
   A diagram showing a transfer table after movement of the MH that is managed by the packet transfer device, which serves as a branch node in the mobile communication access system according to the mode of the present invention.
[Fig. 6]
   A configuration diagram for explaining the configuration of a packet transfer device according to the mode of the present invention.
[Fig. 7]
   A flowchart for explaining the path re-establishment processing performed by the packet transfer device of the mode of the present invention.
[Fig. 8A]
   A diagram showing an example for explaining components for identifying an LSP according to the prior art.
[Fig. 8B]
   A diagram showing another example for explaining components for identifying an LSP according to the prior art.

### BEST MODE FOR CARRYING OUT THE INVENTION

A mobile communication access system and a packet transfer device according to one mode of the present invention will now be explained by employing Figs. 1A to 7. Figs. 1A and 1B are configuration diagrams for explaining the configuration of a mobile communication access system according to the mode of the present invention. Figs. 2A and 2B are diagrams showing the protocol stacks of a control plane and a transfer plane for the mobile communication access system of the mode of the present invention. Fig. 3 is a diagram for explaining the identification of an LSP for the mobile communication access system according to the mode of the invention. Fig. 4 is a sequence chart for explaining example operating procedures for the mobile communication access system according to the mode of the invention. Figs. 5A and 5B are diagrams for explaining a transfer table managed by the packet transfer device that serves as a branch node for the mobile communication access system of the mode of the invention. Fig. 6 is a configuration diagram for explaining the arrangement of the packet transfer device according to the mode of the invention. Fig. 7 is a flowchart for explaining the path re-establishment processing performed by the packet transfer device according to the mode of the invention.

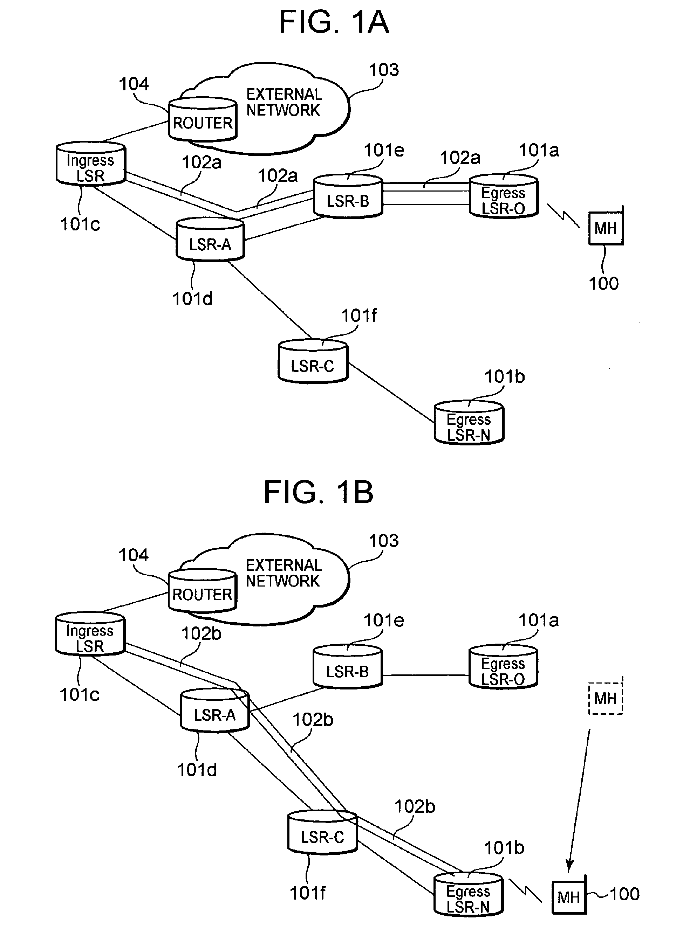

First, the mobile communication access system according to the mode of the invention will be explained while referring to Figs. 1A and 1B. The mobile communication system before a mobile terminal 100 was moved is shown in Fig. 1A, and the mobile communication access system after the mobile terminal 100 was moved is shown in Fig. 100B. The mobile communication access system for the mode of this invention comprises: the mobile terminal (hereinafter also called an MH (Mobile Host) 100; a pre-movement label switch router (hereinafter also called an Egress LSR-O) 101a, which is a label switch router to which the mobile terminal 100 is currently connected; a post-movement label switch router (hereinafter also called an Egress LSR-N) 101b, which is a label switch router to which the mobile terminal 100 is to be connected after moving; a communication destination side label switch router (hereinafter also called an Ingress LSR) 101c, which is a label switch router that is connected to a router 104 of an external network 103 and relays communications between the mobile terminal 100 and a communication destination (not shown) for the mobile terminal 100; and label switch routers (hereafter also called LSR-A to LSR-C) 101d to 101f, which are located between the pre-movement label switch router 101a, the post-movement label switch router 101b and the communication destination side label switch router 101c. An LSP (Label Switch Path) 102a, for which identification information allocated to the mobile terminal 100 is provided, is extended between the pre-movement label switch router 101a and the communication destination side label switch router 101c. Hereinafter, the LSP is also simply called a path. The pre-movement label switch router 101a described above corresponds to a first edge device, and the post-movement label switch router 101b corresponds to a second edge device.

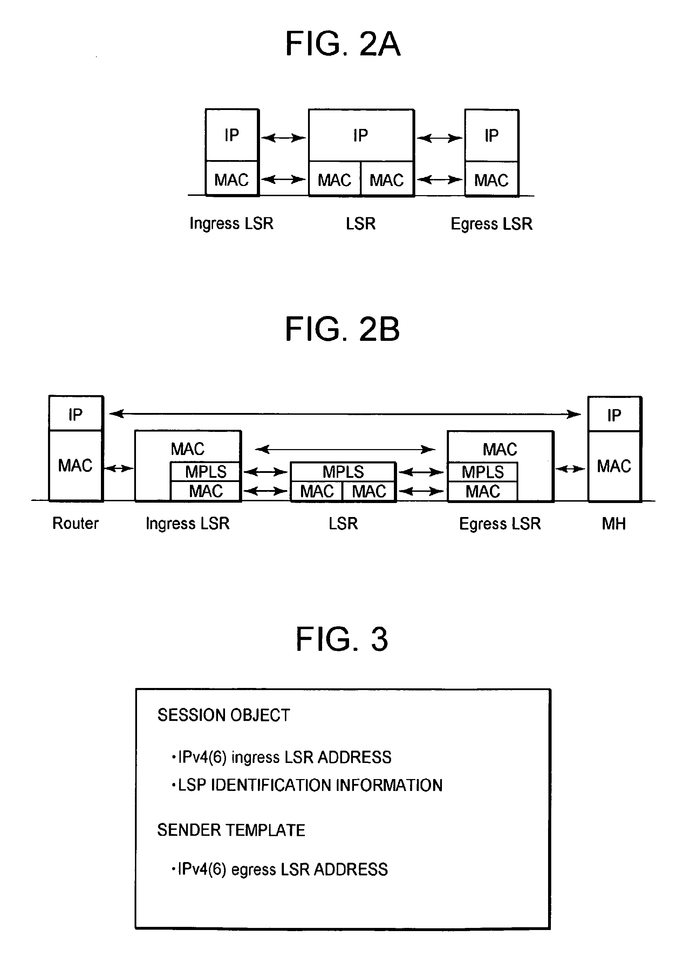

In order to clearly represent the processing for a control message and the transfer of user data, protocol stacks for the mobile communication access system of this invention are shown in Figs. 2A and 2B. A protocol stack for a control plane is shown in Fig. 2A, and a protocol stack for a transfer plane is shown in Fig. 2B. The mobile communication access system of the invention is a system that connects the mobile terminal (MH) 100 to an external network, such as the Internet or an ISP network. According to the mobile communication access system of this invention, two plane structures are provided: a control plane for performing network control or the setup of an LSP; and a transfer plane for exchanging data concerning the mobile terminal with an external network. The control plane is operated as a common IP network, and through routing, a packet is transferred between the individual LSRs. On the other hand, the transfer plane is an L2 tunnel along which the mobile terminal and an external network are connected by a layer 2, and an LSP set by the control plane is operated as an L2 tunnel. Thus, when the mobile terminal is moved and the egress LSR is changed, the IP address of the mobile terminal still need not be changed.

A movement tracking system, which is similar to the mobile communication access system of the mode of the invention, is disclosed in Japanese Patent Laid-Open Application No. 2003-244205. However, the mobile communication access system according to the mode of the invention differs from the movement tracking system disclosed in Japanese Patent Laid-Open Application No. 2003-244205 in its basic arrangement. The mobile communication access system of the mode of this invention is provided on the assumption that a point-to-point path is formed between the communication destination side label switch router 101c and the pre-movement label switch router 101a, to which the mobile terminal 100 is connected. On the other hand, according to the movement tracking system disclosed in Japanese Patent Laid-Open Application No. 2003-244205, a QoS (Quality of Service) path is formed by using a TR (Transit Router) as a boundary. From the above description, accordingly, the path re-establishment processing, etc., is different, so that it can be said that each of the two inventions differ from the other. The components for identifying an LSP will now be explained while referring to Fig. 3. As shown in Fig. 3, the LSP is identified by using a session object and a sender template. The session object includes the address of the Ingress LSR 101c, which is a start node address, and identification information for the LSP, which is allocated to the MH 100, and the sender template includes the address of the Egress LSR, which is an end node address. The above described identification information for the LSP is an identifier that the Ingress LSR 101c allocates the MH 100, and when the MH 100 has accessed the mobile communication access system of this invention the first time, the MH 100 obtains identification information for the pertinent LSP from the Egress LSR that is connected.

When, in accordance with the movement, the mobile terminal 100 has received, from the post-movement label switch router 101b, a beacon that includes, for example, identification information for the post-movement label switch router 101b, and has completed a predetermined process, as shown in the state in Fig. 1B, the mobile terminal 100 is connected to the post-movement label switch router 101b. The path 102b, which was extended between the pre-movement label switch router 101a and the communication destination side label switch router 101c, is re-established, as a path 102b, between the post-movement label switch router 101b and the communication destination side label switch router 101c. It should be noted that the predetermined process will be described later.

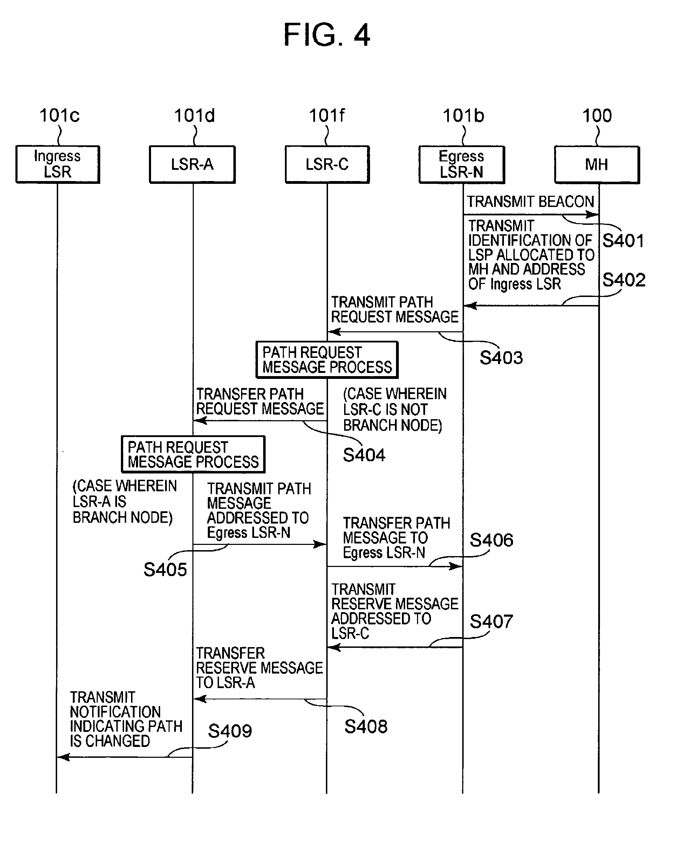

Example operating procedures performed by the mobile communication access system according to the mode of the invention will now be described while referring to Fig. 4. First, the Egress LSR-N 101b transmits, to the surroundings, a beacon that includes, for example, identification information for the Egress LSR-N 101b (e.g., the IP address of the Egress LSR-N 101b used by the control plane) (step S401). At this time, the beacon may be transmitted periodically. Upon receiving the beacon, the MH 100 transmits, to the Egress LSR-N 101b, a notification that includes identification information for the LSP allocated to the MH 100 and the address of the Ingress LSR 101c (step S402). It should be noted that the identification information for the LSP allocated to this MH 100 and the address of the Ingress LSR 101c are stored in a predetermined area of the MH 100.

When the Egress LSR-N 101b has received the notification that includes identification information for the LSP allocated to the MH 100 and the address of the Ingress LSR 101c, in order to request a setup for the path 102b from the Ingress LSR 101c to the Egress LSR-N 101b, the Egress LSR-N 101b employs its routing table, addressed to the Ingress LSR 101c, to transmit to the currently connected LSR-C 101f a path request message that includes the identification information for the LSP allocated to the MH 100, the address of the Ingress LSR 101c, and the address of the Egress LSR-N 101b (step S403). The path request message, as well as the other control message, is transferred by routing on the control plane. When the LSR-C 101f receives the path request message, and when the path is extended to the LSR-C 101f, the LSR-C 101f employs the identification information for the LSP allocated to the MH 100, which is included in the path request message, to determine whether the path extended to the LSR-C 101f is a path allocated to the MH 100. When the LSR-C 101f determines that this path is not a path allocated to the MH 100 (the LSR-C 101f is not a branch node), the LSR-C 101f transfers the path request message to the LSR-A 101d in accordance with its own routing table addressed to the Ingress LSR 101c (step S404).

When the LSR-A 101d receives the path request message and the path is extended to the LSR-A 101d, the LSR-A 101d employs the identification information allocated to the MH 100, which is included in the path request message, and determines whether the path extended to the LSR-A 101d is a path for which the identification information for the LSP, allocated to the MH 100, has been provided. When it is determined that the path is a path allocated to the MH 100 (the LSR-A 101d is a branch node), a path message that includes parameters (QoS information, filter information, etc.) concerning the path 102a currently established is transmitted to the Egress LSR-N 101b (step S405). At this time, the address of the Ingress LSR 101c, which is the address of the same Ingress LSR, is employed as the session object. When the LSR-C 101f receives a path message addressed to the Egress LSR-N 101b, the LSR-C 101f transfers the path message to the Egress LSR-N 101b (step S406). At this time, as a route for the Egress LSR-N 101b that serves as a new edge, a route may be calculated and designated by the LSR-A 101d, or a route for transferring the path request message may be recorded and the inverted route may be designated or a loose route may be designated, without setting points along the route. In this invention, the method is not fixed to one of these.

Upon receiving the path message, the Egress LSR-N 101b transmits a reserve message to the LSR-C 101f, so as to perform the allocation of a new label, the reservation of a band consonant with QoS information, etc. (step S407). When the LSR-C 101f receives the reserve message, the LSR-C 101f processes the reserve message and transmits the resultant reserve message to the LSR-A 101d (step S408). Upon receiving the reserve message, the LSR-A 101d employs the reserve message to re-establish the path 101a as a path 102b. After the path has been re-established, the LSR-A 101d transmits a notification to the Ingress LSR 101c, indicating that the path has been changed (step 409). It should be noted that when the MH 100 received a beacon from the Egress LSR-N 101b, at step 402, instead of transmitting to the Egress LSR-N 101b a notification that includes identification information for the LSP allocated to the MH 100 and the address of the Ingress LSR 101c, the MH 100 may receive identification information for the Egress LSR-N 101b from the beacon of the Egress LSR-N 101b, and transmit the identification information to the Egress LSR-O 101a; may transmit to the Egress LSR-N 101b the LSP information that is allocated to the MH 100 by the Egress LSR-O 100a, and the address of the Ingress LSR 101c; and may re-establish a path. In this case, before the MH 100 establishes communication on the layer 2 with the Egress LSR-N 101b, the MH 100 can employ the pre-movement Egress LSR-O 101a to transmit a signal for a path change.

From the above description, when the MH 100 changes a connection from the Egress LSR-O 101a to the Egress LSR-N 101b, the Ingress LSR 101c need not perform the calculation for a path and transmit a signal for re-establishing the path. Therefore, when many MHs are accommodated and many paths are controlled, the load imposed on the Ingress LSR 101c can be reduced. Furthermore, the Egress LSR-N 101b need only transmit a message to the Ingress LSR 101c, without being aware of the route for the old path 102a, and can thus complete the processing. Further, the branch node of the path is automatically determined, and at the time of the determination, a signal is transmitted to set a path from the LSR-A 101d, which is determined to be a branch node, to the Egress LSR-N 101b. Therefore, the signal route is reduced, compared with the setting of a path from the Ingress LSR 101c. Additionally, since signaling is not performed between the LSR-A 101d, which is a branch node, and the Ingress LSR 101c, consumption of a band due to the forming of multiple paths does not occur. Moreover, since a notification that the Egress LSR-O 101a has been changed to the Egress LSR-N 101b is transmitted to the Ingress LSR 101c after a path has been re-established, a problem that is the result of a delay in the notification of a change does not occur.

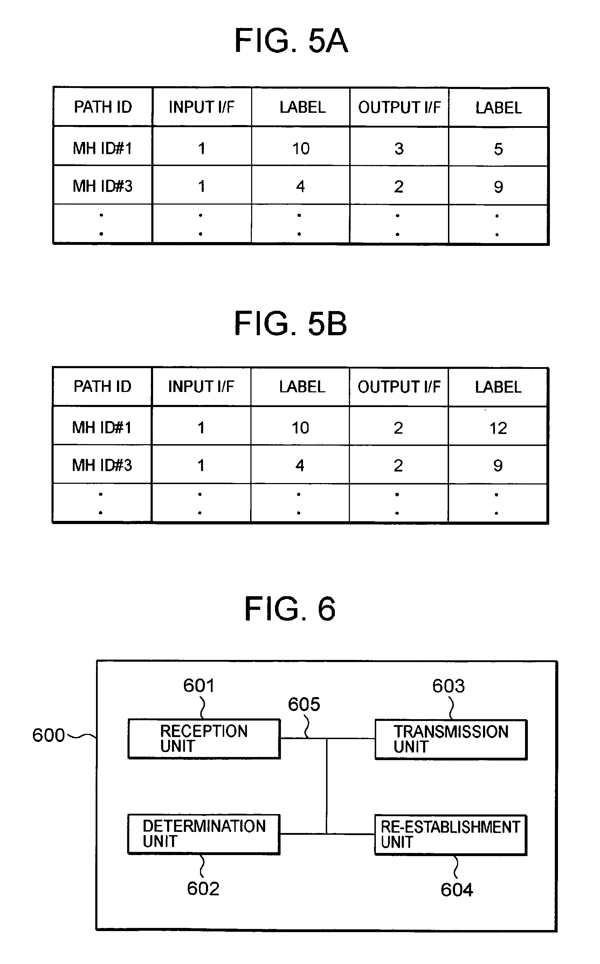

It should be noted that when the LSR-A 101d receives a reserve message, the LSR-A 101d may change its transfer table, which is used for transferring a label switch to a table structure that is consonant with a path 102b that is newly formed. An example transfer table managed by the LSR-A 101d will now be explained while referring to Figs. 5A and 5B. As shown in Figs. 5A and 5B, paths from individual MHs that are established for the LSR-A 101d are managed in the transfer table. The transfer table before and after MH#1 is moved will be explained below. The transfer table before MH#1 is moved is shown in Fig. 5A, and the transfer table after MH#1 is moved is shown in Fig. 5B.

As shown in Fig. 5A, in the transfer table concerning MH#1, before MH#1 is moved, MHID#1 is entered as a path ID, 1 is entered as an input I/F, 10 is entered as its label, 3 is entered as an output I/F, and 5 is entered as its label. When MH#1 is moved in this state, wherein a path is established, the connection destination for MH#1 is changed, and the path is changed accordingly, so that the transfer table is as shown in Fig. 5B. That is, the output I/F is changed; and 2 is entered as the output I/F and 12 is entered as its label. As a result, it is found that the LSR-A 101d changes the path 102a established between the LSR-A 101d and the Egress LSR-O 101a, and re-establishes a path 102b extending from the LSR-A 101d to the Egress LSR-N 101b, to which MH#1 is newly connected. It should be noted that the situation, as it pertains to MH#3, is treated in the same manner.

Further, in this mode, the LSR-C 101f determined that, among the paths established for the LSR-C 101f, there is no path provided for which identification information for the LSP is allocated to the MH 100. However, when it is determined that there is a path for which identification information for the LSP allocated to the MH 100 is provided, a path request is not transferred to the LSR-A 101d, and the same processing as described above for the LSR-A 101d is performed. That is, a path message is transmitted to the Egress LSR-N 101b.

Next, the arrangement of the packet transfer device for the mode of the present invention will be explained while referring to Fig. 6. Here, the packet transfer device is a device corresponding to the LSR-C 101f, the LSR-A 101d or the LSR-B 101e described above. As shown in Fig. 6, a packet transfer device 600 includes a reception unit 601, a determination unit 602, a transmission unit 603 and a re-establishment unit 604, all of which are connected by a bus 605. Furthermore, the packet transfer device 600 stores, in a predetermined storage area (not shown), a control program for controlling the operation of the packet transfer device 600, and control is based on the control program. Further, the packet transfer device 600 includes an interface (not shown) for performing external communication.

The reception unit 601 receives, from the Egress LSR-N 101b, a path request message that includes identification information for an LSP allocated to the MH 100, identification information for the Ingress LSR 101c and identification information for the Egress LSR-N 101b, and that requests a change in the setup of a path. Based on the identification information for the LSP allocated to the MH 100, which is included in the path request message received by the reception unit 601, the determination unit 602 determines whether a path, for which the identification information for the LSP allocated to the MH 100 is provided, has been established for the packet transfer device 600. This determination process is enabled because a path is extended for each mobile terminal, in a one-to-one correspondence.

When the determination unit 602 determines that a path, for which identification information for the LSP allocated to the MH 100 is provided, has been established for the packet transfer device 600, the transmission unit 603 generates a path message that includes parameters related to the path, and transmits the path message to the Egress LSR-N 101b. On the other hand, when the determination unit 602 determines that a path, for which identification information for the LSP allocated to the MH 100 is provided, has not been established for the packet transfer device 600, the transmission unit 603 transfers the path request message to the other packet transfer device that is connected to the packet transfer device 600. The packet transfer device 600, for which it is determined a path for which identification information for the LSP allocated to the MH 100 is provided has been established, is located at the branching point of a path, and corresponds to the LSR-A 101d in Fig. 1A or 1B. When the reception unit 601 receives, from the Egress LSR-N 101b, a reserve message for instructing the re-establishment of a path, the re-establishment unit 604 changes the path for the Egress LSR-O 101a to a path for the Egress LSR-N 101b. That is, the re-establishment unit 604 changes the path extending from the packet transfer device 600 to the Egress LSR-O 101a to the path extending from the packet transfer device 600 to the Egress LSR-N 101b.

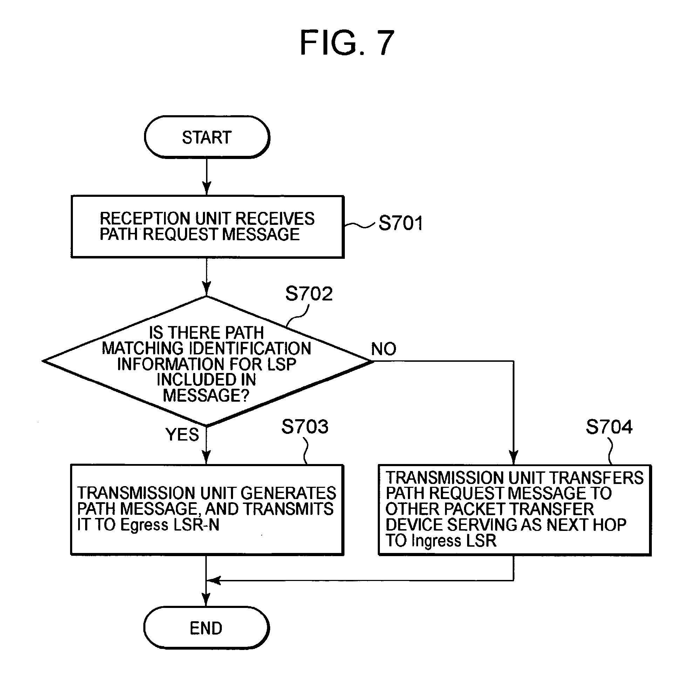

The path re-establishment processing performed by the packet transfer device according to the mode of the present invention will now be described while referring to Fig. 7. The reception unit 601 receives, from the Egress LSR-N 101b, a path request message that includes identification information for an LSP allocated to the MH 100, identification information for the Ingress LSR 101c and identification information for the Egress LSR-N 101b that requests a change in the setup of a path (step S701). Based on the identification information for the LSP allocated to the MH 100, which is included in the path request message received by the reception unit 601, the determination unit 602 determines whether a path allocated to the MH 100 has been established for the packet transfer device 600. That is, the determination unit 602 determines whether there is a path consonant with the identification information for the LSP included in the path request message (step S702).

When the determination unit 602 determines that a path allocated to the MH 100 has been established for the packet transfer device 600, the transmission unit 603 generates a path message that includes parameters related to the path, and transmits the path message to the Egress LSR-N 101b (step S703). On the other hand, when it is determined that a path allocated for the MH 100 has not been established for the packet transfer device 600, the transmission unit 603 transfers the path request message to the other packet transfer device, which is connected to the packet transfer device 600 and is the next hop to the Ingress LSR 101c (step S704).

Through the above processing, when the MH 100 changes a connection from the Egress LSR-O 101a to the Egress LSR-N 101b, the Ingress LSR 101c need not transmit a signal for the calculation of a path and for the re-establishment of the path. Therefore, when many paths are controlled, the load can be reduced. Furthermore, the Egress LSR-N 101b need only transmit a message to the Ingress LSR 101c, without being aware of the route for the old path 102a, and can thus complete the processing. Further, the branch node of the path is automatically determined, and at the time of this determination, a signal is transmitted by the LSR-A 101d, which is determined to be a branch node, to the Egress LSR-N 101b. Therefore, the signal route is shortened. In addition, since a signal is not transmitted between the LSR-A 101d, which is a branch node, and the Ingress LSR 101c, the consumption of a band, due to the forming of multiple paths, does not occur. Moreover, since a notification that the Egress LSR-O 101a has been changed to the Egress LSR-N 101b is transmitted to the Ingress LSR 101c after a path has been re-established, a problem occasioned by a delay in the notification of a change does not occur.

### INDUSTRIAL APPLICABILITY

According to the mobile communication access system, the packet transfer device and the path re-establishing method of the present invention, the useless consumption of resources due to route redundancy can be eliminated, a load imposed by the processing, such as the setup of an LSP, performed by the ingress LSR can be reduced, an increase in the length of a signal route for setting up an LSP can be avoided, and a delay can be prevented in the notification of the change in an egress LSR to which a mobile terminal is to be connected. Thus, for the label switching technology that employs a label, such as an MPLS, to transfer data, the present invention is useful for a mobile communication access system that controls a route change, a packet transfer device, a path re-establishing method, etc.

## Claims

1. A mobile communication access system, which comprises:
edge devices, located at edges of an access network, for connecting a mobile terminal to an external ISP network via a layer 2 tunnel, so as to provide communication between the mobile terminal and a communication destination for the mobile terminal; and
packet transfer devices, belonging to the access network and being located at other than the edges of the access network, for transferring a packet to be exchanged by the mobile terminal and the communication destination of the mobile terminal, and
which designates a label switching path, to which identification information for the mobile terminal is attached, between a first edge device, for the edge devices, for accommodating the mobile terminal and a communication destination edge device, for the edge devices, that is connected to an external network device that is a communication destination for the mobile terminal, so that the label switching path is directed, via the packet transfer devices, from the communication destination edge device to the first edge device,
wherein, when the mobile terminal changes, due to its move, a connection destination from the first edge device to a second edge device that is one of the edge devices, the second edge device obtains an identifier for a label switch path designated as being used for the mobile terminal and an address for the communication destination edge device, the second edge device employing the obtained information for a path and outputting a path setup request packet to the communication destination edge device to request a setup for a path to the second edge device, and
wherein, of the packet transfer devices on the label switch path used for the mobile terminal, a first packet transfer device that received the path setup request packet is regarded as a branch node, and the branch node traps the path setup request packet, sets a branch path addressed to the second edge device, and thereafter changes a transfer destination.

2. The mobile communication access system according to claim 1, wherein, after the mobile terminal has obtained the path information from the edge devices, when a label switch path was set the first time, the mobile terminal transmits a notification for the path information to the second edge device that serves as a moving destination for the mobile terminal.

3. The mobile communication access system according to claim 1, wherein, after the first edge device has received, from the mobile terminal, the address of the second edge device, which is a moving destination, the first edge device transmits to the second edge device a path information notification for the mobile terminal that has been designated for the first edge device.

4. The mobile communication access system according to claim 1, wherein the packet transfer device on the label switch path searches an internally prepared path setup table using an identifier for the label switch path that is included in the patch setup request packet, and when the label switch path has already been set for the packet transfer device, the packet transfer device designates itself as the branch node and halts the packet transfer; and wherein, when the label switch path is not included in the path setup table of the packet transfer device, the packet transfer device transfers the path setup request packet to the communication destination edge device.

5. The mobile communication access system according to claim 1, wherein, as signal procedures for setting a label switch path, the branch node supports an RSVP-TE, and does not employ the address of the branch node but the address of the communication destination edge device as an address for an Ingress LSR that is included in a path request message.

6. The mobile communication access system according to claim 1, wherein, at the time of the path setup, when the branch node receives a value for a label via a reserve message, the branch node exchanges an old destination for a new destination in a transfer table.

7. The mobile communication access system according to claim 1, wherein, at the time of the path setup, when the branch node receives a value for a label via a reserve message, the branch node registers, in a transfer table, both an old destination and a new destination as transfer destinations, and copies a packet to be transferred to two paths.

8. The mobile communication access system according to claim 1, wherein the branch node, after having re-established a label switch path to the second edge device instead of the first edge device, thereafter transmits to the communication destination edge device a path change notification that includes the address of the second edge device.

9. In a mobile communication access system comprising:
edge devices, located at edges of an access network, for connecting a mobile terminal to an external ISP network via a layer 2 tunnel, so as to provide communication between the mobile terminal and a communication destination for the mobile terminal; and
packet transfer devices, belonging to the access network and being located at other than the edges of the access network, for transferring a packet to be exchanged by the mobile terminal and the communication destination of the mobile terminal,
the mobile communication access system designating a label switching path, to which identification information for the mobile terminal is attached, between a first edge device, for the edge devices, for accommodating the mobile terminal and a communication destination edge device, for the edge devices, that is connected to an external network device that is a communication destination for the mobile terminal, so that the label switching path is directed, via the packet transfer devices, from the communication destination edge device to the first edge device,
the packet transfer device in case where the mobile terminal changes, due to its move, a connection destination from the first edge device to a second edge device that is one of the edge devices, comprising:
reception means, for receiving a path setup request packet from the second edge device;
branch path setup means, for trapping the path setup request packet received by the reception means and setting a branch path addressed to the second edge device; and,
transfer destination change means, for changing a transfer destination after the branch path has been designated by the branch path setting means.

10. The packet transfer device according to claim 9, wherein an internally prepared path setup table is searched using an identifier for a label switch path that is included in the patch setup request packet, and when the label switch path has already been set for a packet transfer device, the packet transfer device designates itself as the branch node and halts the packet transfer, or when the label switch path is not included in the path setup table of the packet transfer device, the packet transfer device transfers the path setup request packet to the communication destination edge device.

11. The packet transfer device according to claim 9, wherein, as signal procedures for setting a label switch path, the branch path setting means supports an RSVP-TE, and does not employ the address of the branch node but the address of the communication destination edge device as an address for an Ingress LSR that is included in a path request message.

12. The packet transfer device according to claim 9, wherein, at the time of the path setup, when the transfer destination change means receives a value for a label via a reserve message, the transfer destination change means exchanges an old destination for a new destination in a transfer table.

13. The packet transfer device according to claim 9, wherein, at the time of the path setup, when the transfer destination change means receives a value for a label via a reserve message, the transfer destination change means registers, in a transfer table, both an old destination and a new destination as transfer destinations, and copies a packet to be transferred to two paths.

14. The packet transfer device according to claim 9, wherein, after a label switch path has been re-established to the second edge device instead of the first edge device, a path change notification that includes the address of the second edge device is transmitted to the communication destination edge device.

15. In a mobile communication access system comprising:
edge devices, located at edges of an access network, for connecting a mobile terminal to an external ISP network via a layer 2 tunnel, so as to provide communication between the mobile terminal and a communication destination for the mobile terminal; and
packet transfer devices, belonging to the access network and being located at other than the edges of the access network, for transferring a packet to be exchanged by the mobile terminal and the communication destination of the mobile terminal,
the mobile communication access system designating a label switching path, to which identification information for the mobile terminal is attached, between a first edge device, for the edge devices, for accommodating the mobile terminal and a communication destination edge device, for the edge devices, that is connected to an external network device that is a communication destination for the mobile terminal, so that the label switching path is directed, via the packet transfer devices, from the communication destination edge device to the first edge device,
a path re-establishing method in a case where the mobile terminal changes, due to its move, a connection destination from the first edge device to a second edge device that is one of the edge devices, comprising the steps of:
allowing the second edge device to obtain an identifier for a label switch path designated as being used for the mobile terminal and an address for the communication destination edge device, and to employ the obtained information for a path thereby outputting a path setup request packet to the communication destination edge device to request a setup for a path to the second edge device; and
regarding, as a branch node, of the packet transfer devices on the label switch path used for the mobile terminal, a first packet transfer device that has received the path setup request packet, and the branch node trapping the path setup request packet, thereby setting a branch path addressed to the second edge device, and thereafter the branch node changing a transfer destination.

16. The path re-establishing method according to claim 15, comprising a step of:
after the mobile terminal has obtained the path information from the edge devices, when a label switch path was set the first time, the mobile terminal transmitting a notification for the path information to the second edge device that serves as a moving destination for the mobile terminal.

17. The path re-establishing method according to claim 15, comprising a step of:
after the first edge device has received, from the mobile terminal, the address of the second edge device, which is a moving destination, the first edge device transmitting to the second edge device a path information notification for the mobile terminal that has been designated for the first edge device.

18. The path re-establishing method according to claim 15, comprising a step of:
the packet transfer device on the label switch path searching an internally prepared path setup table using an identifier for the label switch path that is included in the patch setup request packet, and when the label switch path has already been set for the packet transfer device, the packet transfer device designating itself as the branch node and halts the packet transfer, or when the label switch path is not included in the path setup table of the packet transfer device, transferring the path setup request packet to the communication destination edge device.

19. The path re-establishing method according to claim 15, whereby, as signal procedures for setting a label switch path, the branch node supports an RSVP-TE, and does not employ the address of the branch node but the address of the communication destination edge device as an address for an Ingress LSR that is included in a path request message.

20. The path re-establishing method according to claim 15, comprising a step of:
at the time of the path setup, when the branch node receives a value for a label via a reserve message, the branch node exchanging an old destination for a new destination in a transfer table.

21. The path re-establishing method according to claim 15, comprising a step of:
at the time of the path setup, when the branch node receives a value for a label via a reserve message, the branch node registering, in a transfer table, an old destination and a new destination as transfer destinations, and copying a packet to be transferred to two paths.

22. The path re-establishing method according to claim 15, comprising a step of the branch node, after having re-established a label switch path to the second edge device instead of the first edge device, transmitting to the communication destination edge device a path change notification that includes the address of the second edge device.
